# EUROPÄISCHE PATENTSCHRIFT

(11) **EP 0 656 290 B1**
(45) Veröffentlichungstag und Bekanntmachung des Hinweises auf die Patenterteilung: **06.08.1997**
(21) Anmeldenummer: 94117398.1
(22) Anmeldetag: 04.11.1994
(51) Int. Cl.: B60T 1/08, B60K 31/10

(54) **Steuerung zur Geschwindigkeitsbeeinflussung eines Fahrzeuges**
Control device influencing the speed of a vehicle
Dispositif de commande pour influencer la vitesse d'un véhicule

(30) Priorität: 03.12.1993 DE 4341213
(43) Veröffentlichungstag der Anmeldung: 07.06.1995
(73) Patentinhaber: VOITH TURBO GMBH & CO. KG, D-74564 Crailsheim (DE)
(72) Erfinder: Scherer, Roland, D-74564 Crailsheim (DE)
(74) Vertreter: Weitzel, Wolfgang, Dr.-Ing. Patentanwalt

(56) Entgegenhaltungen:
- EP-A- 0 145 374
- DE-A- 2 241 818
- DE-A- 3 610 991

## Beschreibung

Die Erfindung betrifft eine Steuerung zur Geschwindigkeitsbeeinflussung eines Fahrzeuges.

Es ist bekannt, daß Nutzfahrzeuge mit den zwei Systemen
- Retarder mit zusätzlicher Funktion "konstante Geschwindigkeit" - RKG (Regelung auf konstante Geschwindigkeit mittels Retardersteuerung) und
- Automatische Geschwindigkeitsbegrenzung - AGB (bei Überschreitung eines voreinstellbaren Maximalwertes erfolgt eine Abregelung der Brennkraftmaschine)
ausgerüstet sein können.

Der Einsatz beider Systeme erfolgt derart, daß beide autark arbeiten -RKG für Fahren im Gefälle und AGB im Traktionsbetrieb. Die Aktivierung des Retarders mit Funktion "konstante Geschwindigkeit" bewirkt bei entsprechender Sollwertvorgabe durch den Fahrer, insbesondere im stärkeren Gefälle, die Einhaltung der vom Fahrer gewünschten Geschwindigkeit.

Die automatische Geschwindigkeitsbegrenzung (AGB) bewirkt im Traktionsbetrieb (=Motorbetrieb), also in der Ebene, Steigung oder auch bei geringem Gefälle, bei dem der Motor vorzugsweise im Leerlauf arbeitet und somit eine geringe Motorbremswirkung und Eigenverzögerung aufweist, das Einhalten einer fest oder variabel vorgegebenen Maximalgeschwindigkeit.

Das System zur automatischen Geschwindigkeitsbegrenzung im Traktionsbetrieb umfaßt eine Regeleinrichtung und eine Stelleinrichtung, die an der Brennkraftmaschine, speziell an der Brennstoffdosiereinrichtung (Drosselklappe oder Einspritzvorrichtung) angreift. Ein gesetzlich vorgeschriebener oder anderer gewünschter Geschwindigkeitswert, der nicht überschritten werden soll (zulässige Maximalgeschwindigkeit), ist entweder in der Regeleinrichtung fest gespeichert oder frei vom Fahrer einstell- und in der Regeleinrichtung hinterlegbar. Der Istwerteingang der Regeleinrichtung ist an eine Meßeinrichtung gekoppelt, welche die Istgeschwindigkeit des Fahrzeuges bzw. die Drehzahl der Räder mißt. Es erfolgt ein ständiger Vergleich zwischen der aktuellen Istgeschwindigkeit und dem Geschwindigkeitswert, der nicht überschritten werden soll (voreingestellte Maximalgeschwindigkeit). Solange die aktuelle Istgeschwindigkeit kleiner als die voreingestellte Maximalgeschwindigkeit ist, wird ein vom Fahrer beispielsweise am Gaspedal vorgegebener Wunsch nach einer höheren Geschwindigkeit in ein Stellsignal für die Brennstoffdosiereinrichtung umgesetzt. Ist die aktuelle Istgeschwindigkeit jedoch höher als die eingestellte voreingestellte Maximalgeschwindigkeit, wird eine Regelung zur Einhaltung der voreingestellten Maximalgeschwindigkeit aktiviert. Die Regelung ist dabei der Steuerung der Geschwindigkeit mittels Eingabe am Gaspedal bevorrechtigt. In diesem Fall wird die Abweichung zwischen Ist- und voreingestellter Maximalgeschwindigkeit in ein Stellsignal für die Stelleinrichtung, die unmittelbar an der Brennstoffdosiereinrichtung der Brennkraftmaschine wirksam wird, umgewandelt. Die Brennkraftmaschine wird soweit zurückgeregelt, bis der Grenzwert der voreingestellten Maximalgeschwindigkeit nicht mehr überschritten wird. Bei Fahrt im Gefälle kann das System der automatischen Geschwindigkeitsbegrenzung solange wirksam werden, bis der Regelbereich, der in der Regel den Arbeitsbereich der Brennkraftmaschine umfaßt, ausgeschöpft ist.

Zur Realisierung der AGB-Funktion erforderliche Komponenten sind eine Steuer- bzw. Regeleinrichtung und ein zugehöriges Stellglied- bzw. eine Stelleinrichtung zur Verstellung der Brennstoffdosiereinrichtung der Brennkraftmaschine bzw. allgemein des Leistungsstellgliedes einer Antriebsmaschine. Das Stellglied ist dabei entweder rein elektromechanisch ausgeführt, beispielsweise als elektrischer Stellmotor, oder elektro-pneumatisch, d.h. in Form eines elektro-pneumatischen Ventiles mit zugehörigem Stellzylinder.

Das System Retarder mit der Funktion "konstante Geschwindigkeit" ist nur manuell durch Fahrereingriff aktivierbar. Dem Retarder sind zur Realisierung dieser Aufgabe eine Steuereinrichtung und eine Stelleinrichtung in Form eines Proportionalventils zugeordnet. Die Komponenten Steuereinrichtung und Stelleinrichtung sind aber auch zur Realisierung weiterer Steuer- und Regelaufgaben, die mittels des Retarders verwirklicht und ebenfalls in einem mit AGB-System ausgerüsteten Fahrzeug zum Einsatz kommen können, erforderlich. Dazu gehören die Einstellung eines bestimmten Bremsmomentes, die Einstellung eines konstanten Bremsmomentes und einer konstanten Verzögerung.

Beide Systeme dienen der Beeinflussung der Fahrgeschwindigkeit, können jedoch in unterschiedlichen Betriebszuständen des Fahrzeuges wirken. Aufgrund des Vorliegens zweier Steuer-bzw. Regelsysteme - eins zur Abregelung der Arbeitsmaschine bei Überschreitung eines voreinstellbaren Maximalwertes der Geschwindigkeit und ein zweites zur Steuerung des Retarders - ergibt sich eine große Anzahl an erforderlichen Systemkomponenten, die sich in einem hohen Vernetzungsaufwand niederschlägt und Bauraum beansprucht. Die Wahrscheinlichkeit des Ausfalles eines der beiden Systeme durch den Ausfall von Systemkomponenten ist aufgrund der hohen Anzahl von Systemkomponenten sehr groß.

Allgemein ist aus der DE 36 10 991 A1 bekannt, die automatische Geschwindigkeitsbegrenzungsregelung durch Abregeln der Brennkraftkraftmaschine mit einem weiteren System zur Regelung auf konstante Fahrgeschwindigkeit zu koppeln. Nach Ausschöpfung des Regelbereiches der Brennkraftmaschine durch Reduzierung der Kraftstoffzufuhr durch Ansteuerung der Einspritzpumpe wird eine Servoschaltung aktiviert, mittells der entweder die Motorbremseinrichtung zugeschaltet oder die Einspritzpumpe des Fahrzeuges gänzlich auf Nullförderung gestellt wird. In diesem Fall sind die beiden Systeme nacheinander geschalten, wobei die Abregelung der Brennkraftmaschine Vorrang genießt. Dies kann jedoch gerade bei Fahrt im Gefälle zu einer ungewünschten Beschleunigung des Fahrzeuges führen ehe die Bremseinrichtung aktiviert wird.

Der Erfindung liegt die Aufgabe zugrunde, die genannten Nachteile zu vermeiden, d.h. beide Systeme derart im Fahrzeug zu integrieren, daß eine Reduzierung der Gesamtanzahl der Systemkomponenten erreicht wird und damit auch Fehlerquellen ausgeschieden und die Ausfallwahrscheinlichkeit der Systeme gesenkt werden.

Die erfindungsgemäße Lösung der Aufgabe besteht gemäß Anspruch 1 darin, daß das ohnehin im Fahrzeug mit installiertem Retarder vorhandene Retardersteuergerät und die zugehörige Stelleinrichtung im Traktionsbetrieb zusätzlich zur Abregelung der Antriebsmaschine bei Überschreitung eines voreinstellbaren zulässigen Maximalwertes der Geschwindigkeit genutzt werden.

Dadurch wird erreicht, daß das Gesamtsystem kompakter wird; nur noch eine Steuereinrichtung und eine Stelleinrichtung bedeuten einen Gewinn an Bauraum im Fahrzeug. Die Ausfallwahrscheinlichkeit verringert sich aufgrund der Verringerung der Anzahl der Systemkomponenten. Die Steuerung umfaßt dazu eine Steuereinrichtung, eine Stelleinrichtung und eine Schalteinrichtung.

Die Steuereinrichtung weist dazu wenigstens zwei Eingänge auf - einen ersten Eingang für ein Geschwindigkeitssignal und einen zweiten Eingang für ein Signal von einem Retarderschalter. Weiterhin sind wenigstens zwei Ausgänge vorgesehen - ein erster Ausgang für ein Stellsignal und ein zweiter Ausgang für ein Schaltsignal. Der erste Eingang ist an eine Meßeinrichtung gekoppelt, die die Istgeschwindigkeit des Fahrzeuges bzw. die Drehzahl der Räder mißt. Der zweite Eingang ist mit dem Retarderschalter gekoppelt.

Der erste Ausgang ist mit der Stelleinrichtung und der zweite Ausgang mit der Schalteinrichtung gekoppelt. Die Schalteinrichtung weist wenigstens zwei Schaltstellungen auf; eine erste Schaltstellung zur Verbindung der Stelleinrichtung mit dem Retarder und eine zweite Schaltstellung, in der die Stelleinrichtung mit dem Leistungsstellglied der Antriebsmaschine gekoppelt ist. Es sind Mittel vorhanden, die die aktuelle Istgeschwindigkeit mit einer voreinstellbaren zulässigen Maximalgeschwindigkeit vergleichen und die bewirken, daß bei einer Überschreitung der Maximalgeschwindigkeit und Nullstellung des Retarderschalters die Stelleinrichtung mit der Antriebsmaschine gekoppelt wird und daß im Fall einer Überschreitung der Maximalgeschwindigkeit und dem Vorliegen eines Signales vom Retarderschalter die Stelleinrichtung mit dem Retarder gekoppelt wird.

Eingangssignale vom Retarderschalter können Bremsstufen (BS), ein gewünschtes Bremsmoment (M_{brems}) oder ein voreinstellbarer Wert für eine konstant zu haltende Geschwindigkeit (vₖₒₙₛₜ) sein, wobei im ersten Fall die Steuereinrichtung am ersten Ausgang das entsprechende Stellsignal für die Stelleinrichtung ausgibt, während im zweiten Fall eine Regelung aktiviert wird, die der Steuerung untergeordnet ist. Analog dazu können am Retarderschalter auch weitere Steuer- und Regelfunktionen vorgegeben werden, z.B. eine gewünschte konstante Verzögerung.

Weitere vorteilhafte Ausgestaltungsmöglichkeiten sind in den Unteransprüchen wiedergegeben. Als gemeinsame Stelleinrichtung wird das ohnehin zur Retardersteuerung erforderliche Proportionalventil genutzt. Am Leistungsstellglied ist dann ein Stellzylinder vorgesehen, der mit dem Ausgangsdruck des Proportionalventiles beaufschlagbar ist.

Die Schalteinrichtung, die die Verbindung zwischen Stelleinrichtung und Retarder oder Antriebsmaschine entsprechend der möglichen Schaltstellungen in Abhängigkeit von den am Eingang der Steuereinrichtung anliegenden Signale bewirkt, ist vorzugsweise als Schaltventil in Form eines Mehr-Wege-Ventiles ausgeführt.

Unter einem weiteren Aspekt der Erfindung kann die Steuerung derart weiterentwickelt und ausgebaut werden, daß zusätzliche vorteilhafte Funktionen mit ihr erfüllt werden können. Eine erste Möglichkeit besteht in der Festlegung der Prioritäten, um Fehlbedienungen des Fahrpersonals nicht wirksam werden zu lassen, z.B. eine gleichzeitige Aktivierung des Retarders durch Verstellung des Retarderschalters und Betätigung eines Fußpedals oder eines Gashebels, d.h. Verstellung am Leistungsstellglied der Antriebsmaschine derart, daß eine Geschwindigkeitserhöhung erreicht wird. In diesem Fall würden Retarder und Antriebsmaschine gegeneinander arbeiten. Entsprechend der Vorgabe für den Retarder und der Stärke der Gashebelbetätigung werden für beide Systeme einzeln betrachtet aufgrund ihres Gegeneinanderarbeitens nur unbefriedigende Ergebnisse erzielt. Deshalb ist es sinnvoll, die Prioritäten der einzelnen Systeme für bestimmte Einsatzfälle festzulegen. Vorzugsweise wird im genannten Fall der Retarder bevorrechtigt.

Bei einer gleichzeitigen Betätigung von Retarder und Gaspedal bei Überschreitung der Maximalgeschwindigkeit besitzt vorzugsweise immer der Retarder Priorität. Alternativ dazu besteht auch die Möglichkeit, daß die zuletzt vom Fahrer betätigte Funktion -Gaspedal oder Retarderschalter - wirksam wird.

Bei Aktivierung der Konstantgeschwindigkeitsfunktion des Retarders ist es gemäß Anspruch 9 sinnvoll, das Leistungsstellglied der Arbeitsmaschine derart zu verstellen, daß die Leerlaufposition erreicht ist. Dadurch wird ein Gegeneinanderarbeiten von Antriebsmaschine und Retarder vermieden. Zur Realisierung ist entweder ein Zusatzschaltventil vorzusehen oder das Schaltventil in Form eines geeigneten Mehr-Wege-Schaltventiles einzusetzen, das dieser Aufgabe gerecht wird.

Die Mittel, die alle Beziehungen zwischen den Eingangs- und Ausgangsgrößen der Steuereinrichtung bestimmen bzw. festlegen, können beispielsweise als eine interne Schaltlogik ausgeführt oder bei Ausbildung der Steuereinrichtung als Mikroprozessor vorprogrammierbare Routinen sein. Innerhalb der Steuereinrichtung können demnach auch die Aufgaben eines Reglers ausgeführt werden.

Die erfindungsgemäße Lösung wird nachfolgend anhand eines in einer Figur dargestellten Blockschemas erläutert.

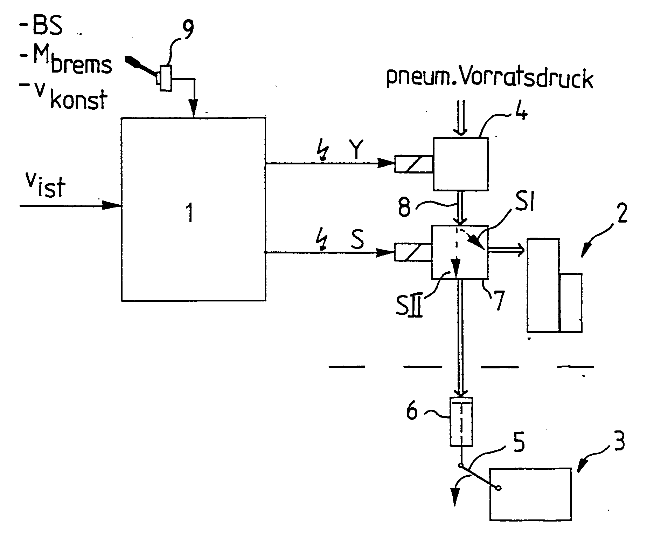

Die Figur zeigt eine Steuereinrichtung 1 für die Realisierung von Steuer- und Regelungsaufgaben an einem Retarder 2 und einer Antriebsmaschine 3, welche beispielsweise als Brennkraftmaschine ausgebildet ist.

Die Realisierung eines gewünschten Bremsmomentes ist von der Änderung des Füllungsgrades des Retarders 2 abhängig. Die Steuerung des Füllungsgrades eines Retarders erfolgt in der Regel durch Druckluft. Der erforderliche Druck wird über ein Stellglied 4, in der Regel ein Proportionaldruckventil, bereitgestellt. Die Größe des pneumatischen Ausgangsdruckes des Proportionaldruckventiles bestimmt die Änderung des Füllungsgrades des Retarders.

Die Brennkraftmaschine 3 weist eine Brennstoffdosiereinrichtung 5 auf. An der Brennstoffdosiereinrichtung 5 wird bei Überschreiten eines voreinstellbaren Wertes für eine maximal zulässige Geschwindigkeit v_{begr} ein Stellelement wirksam, hier ein pneumatischer Stellzylinder 6. Der Stellzylinder 6 wird von einer Stelleinrichtung mit dem erforderlichen Druck zum Herbeiführen einer entsprechenden Verstellung an der Brennstoffdosiereinrichtung 5 beaufschlagt. Als Stelleinrichtung wird hier das ohnehin zur Retardersteuerung erforderliche Proportionalventil 4 verwendet.

An der Brennstoffdosiereinrichtung 5 greift weiterhin ein, hier nicht dargestellter Mechanismus an, der eine Verstellung der Brennstoffdosiereinrichtung 5 entsprechend eines vom Fahrer vorgegebenen Wunsches nach höherer Geschwindigkeit bzw. Beschleunigung, beispielsweise durch Betätigung des Fußpedals, bewirkt. Diese Direktsteuerung zwischen Fußpedal und Brennstoffdosiereinrichtung 5 ist bei Aktivierung bzw. Überschreitung des voreingestellten Wertes für die maximal zulässige Geschwindigkeit v_{begr} wirkungslos.

Die Steuereinrichtung weist wenigstens zwei Eingänge - einen ersten Eingang und einen zweiten Eingang - und wenigstens zwei Ausgänge - einen ersten Ausgang und einen zweiten Ausgang - auf. Der Steuereinrichtung ist das Proportionalventil 4 und eine Schalteinrichtung 7 zur Zuordnung des Proportionalventiles 4 zum Retarder 2 oder zur Brennkraftmaschine 3, d.h. zum Verbinden von Stelleinrichtung 4 mit dem Retarder oder der Brennstoffdosiereinrichtung der Brennkraftmaschine, nachgeordnet. Der Ausgang des Proportionalventiles ist dazu über eine Wirkleitung 8 mit der Schalteinrichtung 7 und entsprechend der Schaltstellung der Schalteinrichtung 7 mit dem Retarder oder der Brennstoffdosiereinrichtung verbunden. Die Schalteinrichtung 7 ist derart aufgebaut und ausgebildet, das diese entsprechend den Eingangsgrößen der Steuereinrichtung und der gewünschten Funktion, wenigstens zwei Schaltstellungen realisieren kann. Eine erste Schaltstellung SI dient zur Realisierung der Verbindung zwischen Stelleinrichtung 4 und dem Retarder 2. Eine zweite Schaltstellung SII dient zur Verbindung der Stelleinrichtung 4 mit der Brennkraftmaschine 3. Im Fall der Ausführung der Stelleinrichtung als Proportionalventil wird der Ausgangsdruck des Proportionalventiles in der ersten Schaltstellung SI am Retarder 2 wirksam, in der zweiten Schaltstellung SII am Stellzylinder 6 an der Brennstoffdosiereinrichtung. Auschlaggebend für die einzelnen Schaltstellungen sind auch die in der Steuereinrichtung intern vorgesehen Abläufe.

Dem ersten Eingang wird ein am Retarderschalter 9 vorgebbares Signal für ein gewünschtes Bremsmoment M_{brems}, eine Bremsstufe BS oder auch nach Möglichkeit ein gewünschter Wert für eine konstant zu haltende Geschwindigkeit vₖₒₙₛₜ e.t.c. zugeführt. Dem zweiten Eingang wird ein Signal für den aktuellen Geschwindigkeitswert vᵢₛₜ, der mittels einer hier nicht verdeutlichten Meßeinrichtung ständig ermittelt wird, zugewiesen.

Am ersten Ausgang wird ein Stellsignal Y für das Proportionalventil 4 ausgegeben. Am zweiten Ausgang wird ein Signal S zur Zuordnung des Ausgangsdruckes des Proportionalventiles zum Retarder 2 oder zur Brennkraftmaschine 3 abgegeben.

Hinsichtlich der an den Eingängen anliegenden Signale sind verschiedene Fälle zu unterscheiden:
1)
   erster Eingang : Tachosignal für vᵢₛₜ
   zweiter Eingang: Retarderschalter in Nullstellung
   Vᵢₛₜ < v_{begr}
2)
   erster Eingang : Tachosignal für vᵢₛₜ
   zweiter Eingang: Retarderschalter in Nullstellung
   vᵢₛₜ > v_{begr}
3)
   erster Eingang : Tachosignal für vᵢₛₜ
   zweiter Eingang: Retarderschaltersignal für M_{brems} oder vₖₒₙₛₜ
   Vᵢₛₜ < v_{begr}
4)
   erster Eingang : Tachosignal für vᵢₛₜ
   zweiter Eingang: Retarderschaltersignal für M_{brems} oder vₖₒₙₛₜ
   Vᵢₛₜ > v_{begr}

Bei Vorliegen des Tachosignals für die aktuelle Fahrgeschwindigkeit vᵢₛₜ erfolgt innerhalb der Steuereinrichtung 1, bzw. der Steuerung untergeordnet, ein Vergleich mit der zulässigen Maximalgeschwindigkeit v_{begr}, die nicht überschritten werden darf. Diese zulässige Maximalgeschwindigkeit v_{begr} ist entweder ein fest innerhalb der Steuereinrichtung 1 abgespeicherter Wert oder kann als mögliche dritte Eingangsgröße der Steuereinrichtung vom Fahrer vorgegeben werden.

Ist die aktuelle Geschwindigkeit vᵢₛₜ kleiner als die zulässige Maximalgeschwindigkeit v_{begr}, werden keine Stell- und Schaltsignale für die Stelleinrichtung 4 und die Schalteinrichtung 7 abgegeben. Bei einem Beschleunigungswunsch des Fahrers durch Betätigung des Gaspedales erfolgt eine zur gewünschten Beschleunigung äquivalente Verstellung an der Brennstoffdosiereinrichtung mittels einer Direktsteuerung zwischen Fußpedal und Brennstoffdosiereinrichtung.

Ist die aktuelle Istgeschwindigkeit gleich oder größer als die zulässige Maximalgeschwindigkeit v_{begr}, wird die Regelung zur Einhaltung der zulässigen Maximalgeschwindigkeit v_{begr} aktiviert. Am zweiten Ausgang der Steuereinrichtung liegt das Signal zum Verbinden von Stelleinrichtung 4 mit der Brennstoffdosiereinrichtung der Brennkraftmaschine an.

Das Proportionalventil 4 beaufschlagt den Stellzylinder 6 mit einem Druck, der zu einer Verschiebung des Kolbens des Stellzylinders 6 führt, die eine Änderung der Einstellung an der Brennstoffdosiereinrichtung bewirkt. Der dazu erforderliche Druck wird über ein Signal am ersten Ausgang am Proportionalventil 4 realisiert. Der ständige Vergleich von Ist- und zulässiger Maxiamlgeschwindigkeit findet beispielsweise in einem, in der Steuereinrichtung integriertem Regler statt. Eine Abregelung der Brennkraftmaschine erfolgt solange, bis die zulässige Maximalgeschwindigkeit v_{begr} nicht mehr überschritten wird.

Ist die aktuelle Istgeschwindigkeit vᵢₛₜ kleiner als die zulässige Maximalgeschwindigkeit v_{begr} und wurde am Retarderschalter 9 ein Signal für ein gewünschtes Bremsmoment M_{brems} vorgegeben, das am zweiten Eingang anliegt, gibt die Steuereinrichtung am zweiten Ausgang das Signal zum Verbinden von Proportionalventil 4 mit dem Retarder. Am ersten Ausgang liegt das Stellsignal zum Proportionalventil zur Bereitstellung eines entsprechenden Ausgangsdruckes an, der eine Änderung des Füllungsgrades bewirkt.

Bei Fahrt im Gefälle und Vorgabe "Konstantgeschwindigkeit" am Retarderschalter 9 erfolgt der Steuerung untergeordnet ein Vergleich zwischen der vorgegebenen Geschwindigkeit vₖₒₙₛₜ und der aktuellen Istgeschwindigkeit. Bei einer Abweichung zwischen vᵢₛₜ und vₖₒₙₛₜ gibt die Steuereinrichtung 1 am zweiten Ausgang das Signal zum Verbinden des Proportionalventiles 4 mit dem Retarder 2. Am ersten Ausgang liegt das Stellsignal Y zum Proportionalventil zur Bereitstellung eines zum Erreichen der Konstantgeschwindigkeit erforderlichen Ausgangsdruckes an, der eine Änderung des Füllungsgrades des Retarders und damit die Abgabe entsprechender Bremsmomente bewirkt.

Unter einem weiteren Aspekt der Erfindung kann die Steuerung derart weiterentwickelt und ausgebaut werden, daß zusätzliche, für das Fahrverhalten vorteilhafte Funktionen erfüllt werden können. Dazu gehören
1) Setzen von Priotitäten
2) Leerlaufstellung der Antriebsmaschine während jeder Aktivierung der Konstantgeschwindigkeitsfunktion.

Die erste Aufgabe besteht darin, Fehlbedienungen des Fahrpersonals nicht wirksam werden zu lassen, z.B. eine gleichzeitige Aktivierung des Retarders, beispielsweise durch Verstellung des Retarderschalters 9, und Betätigung eines Fußpedals oder eines Gashebels, d.h. Verstellung am Leistungsstellglied 5 der Antriebsmaschine derart, daß eine Geschwindigkeitserhöhung erreicht wird. In diesem Fall arbeiten Retarder 2 und Antriebsmaschine 3 gegeneinander. Entsprechend der Auslegung des Retarders und der Betätigung des Fußpedals kann jeweils für das einzelne System kein befriedigendes Ergebnis erzielt werden. Hier ist es sinnvoll, von vornherein eine Festlegung zu treffen, welches der aktivierten Systeme Priorität besitzt. Vorzugsweise wird hier der Retarder bevorrechtigt. Alternativ dazu besteht die Möglichkeit, die zuletzt vom Fahrer betätigte Funktion (Fußpedal oder Retarderschalter 9) wirksam werden zu lassen.

Bei einer gleichzeitigen Aktivierung von Retarder und Betätigung des Fuß- bzw. Gaspedals bei Maximalgeschwindigkeit wird vorzugsweise die Priorität der Retarderbetätigung zugewiesen.

Weiterhin empfiehlt es sich, bei Betätigung des Retarders bzw. der Retarderfunktion "Konstante Geschwindigkeit", die Arbeitsmaschine in die Leerlaufposition zu bringen. Möglich ist, hier im einzelnen jedoch nicht dargestellt, die Verwendung eines geeigneten Mehr-Wege-Schaltventiles als Schaltventil. Eine andere Möglichkeit besteht darin, ein zusätzliches Schaltventil zur Ansteuerung des pneumatischen Stellzylinders vorzusehen.

Diese Zusatzfunktionen können ebenfalls mit der Steuereinrichtung realisiert werden, jedoch sind zu diesem Zweck weitere Ein- und Ausgänge vorzusehen und weitere Beziehungen zwischen den Eingangs- und Ausgangsgrößen in der Steuereinrichtung festzulegen. Die Steuereinrichtung wird kompakter, da beispielsweise zusätzliche Vergleichstellen und Verknüpfungen mit Fallentscheidungen vorzusehen sind.

Die erfindungsgemäße Ausführung der Grundsteuerung ist entsprechend den Einsatzbedingungen ausbau- und um zusätzliche Funktionen erweiterbar.

## Patentansprüche

1. Steuerung zur Geschwindigkeitsbeeinflussung für den Einsatz in Fahrzeugen mit einem Retarder und einer Antriebsmaschine mit zugehörigem Leistungsstellglied
1.1 es ist eine Steuereinrichtung (1) vorgesehen;
1.2 es ist eine Stelleinrichtung (4) vorgesehen;
1.3 es ist eine Schalteinrichtung (7) mit wenigstens einer ersten (SI) und einer zweiten Schaltstellung (SII) vorgesehen;
1.4 in der ersten Schaltstellung (SI) ist die Stelleinrichtung (4) mit dem Retarder (2) gekoppelt;
1.5 in der zweiten Schaltstellung (SII) ist die Stelleinrichtung (4) mit dem Leistungsstellglied (5) der Antriebsmaschine (3) verbunden;
1.6 die Steuereinrichtung (1) weist wenigstens einen ersten Eingang für ein Geschwindigkeitssignal auf;
1.7 der erste Eingang ist an eine Meßeinrichtung gekoppelt, die die Istgeschwindigkeit des Fahrzeuges bzw. die Drehzahl der Räder mißt;
1.8 die Steuereinrichtung (1) bewirkt, daß die aktuelle Istgeschwindigkeit mit einer voreinstellbaren zulässigen Maxiamalgeschwindigkeit verglichen wird;
1.9 die Steuereinrichtung (1) weist wenigstens einen ersten und einen zweiten Ausgang auf;
gekennzeichnet durch die folgenden Merkmale:
1.10 die Steuereinrichtung (1) weist wenigstens einen weiteren zweiten Eingang für ein Signal von einem Retarderschalter (9) auf;
1.10 der erste Ausgang ist mit der Stelleinrichtung (4) gekoppelt;
1.11 der zweite Ausgang ist mit der Schalteinrichtung (7) gekoppelt;
1.12 die Steuereinrichtung (1) bewirkt, daß bei einem Vergleich der aktuellen Istgeschwindigkeit mit einer voreinstellbaren zulässigen Maxiamalgeschwindigkeit
- bei einer Überschreitung der Maximalgeschwindigkeit und Retarderschalter in Nullstellung die Stelleinrichtung (4) mit der Antriebsmaschine (3) gekoppelt wird;
- bei einer Überschreitung der Maximalgeschwindigkeit und Signal vom Retarderschalter (9) die Stelleinrichtung (4) mit dem Retarder (2) gekoppelt wird.

2. Steuerung nach Anspruch 1, gekennzeichnet durch die folgenden Merkmale:
2.1 die Stelleinrichtung (4) ist als pneumatisches Proportionalventil ausgeführt;
2.2 dem Leistungsstellglied (5) der Antriebsmaschine ist ein pneumatischer Stellzylinder (6) zugeordnet.

3. Steuerung nach einem der Ansprüche 1 oder 2, dadurch gekennzeichnet, daß die Schalteinrichtung (7) ein Mehr-Wege-Ventil ist.

4. Steuerung nach einem der Ansprüche 1 bis 3, dadurch gekennzeichnet, daß bei Unterschreitung der Maximalgeschwindigkeit und Vorliegen des Signales vom Retarderschalter (9) und gleichzeitiger Aktivierung einer zweiten Steuerung, die am Leistungsstellglied (5) wirksam wird, die Schalteinrichtung (7) die erste Schaltstellung (SI) einnimmt.

5. Steuerung nach einem der Ansprüche 1 bis 4,
gekennzeichnet durch die folgenden Merkmale:
5.1 als Signal vom Retarderschalter (9) liegt die Einhaltung eines gewünschten einstellbaren Geschwindigkeitswertes (Konstantgeschwindigkeitsfunktion) an;
5.2 die Steuereinrichtung (1) bewirkt einen fortlaufenden Vergleich zwischen aktueller Istgeschwindigkeit und gewünschter Konstantgeschwindigkeit und bei Abweichung eine Einregelung des gewünschten Geschwindigkeitswertes durch Steuerung des Retarders (2).

6. Steuerung nach einem der Ansprüche 1 bis 5, dadurch gekennzeichnet, daß die Steuereinrichtung (1) eine integrierte Schaltlogik umfaßt.

7. Steuerung nach einem der Ansprüche 1 bis 5, dadurch gekennzeichnet, daß die Steuereinrichtung (1) als Mikroprozessor ausgeführt ist, in dem vorprogrammierbare Routinen abgearbeitet werden.

8. Steuerung nach einem der Ansprüche 1 bis 7, dadurch gekennzeichnet, daß bei Vorliegen des Signales vom Retarderschalter "Konstantgeschwindigkeit" (vₖₒₙₛₜ) das Leistungsstellglied der Antriebsmaschine zuerst in die Leerlaufposition gebracht wird.

## Claims

1. Control device for influencing speed for use in vehicles with a retarder and a driving engine with associated output regulating member
1.1 a control device (1) is provided;
1.2 a regulating device (4) is provided;
1.3 a switching device (7) is provided with at least one first switching position (SI) and one second switching position (SII);
1.4 in the first switching position (SI) the regulating device (4) is connected to the retarder (2);
1.5 in the second switching position (SII) the regulating device (4) is connected to the output regulating member (5) of the driving engine (3);
1.6 the control device (1) comprises at least one first input for a speed signal;
1.7 the first input is connected to a measuring device, which measures the actual speed of the vehicle or the rotational speed of the wheels;
1.8 the control device (1) gives rise to the current actual speed being compared with an admissible maximum speed which can be preset;
1.9 the control device (1) comprises at least one first and one second output;
characterised by the following features:
1.10 the control device (1) comprises at least one further second input for a signal from a retarder switch (9);
1.10 the first output is connected to the regulating device (4);
1.11 the second output is connected to the switching device (7);
1.12 the control device (1) gives rise to the fact that upon a comparison of the current actual speed with an admissible maximum speed which can be preset
- when the maximum speed is exceeded and the retarder switch is in the zero position, the regulating device (4) is connected to the driving engine (3);
- when the maximum speed is exceeded and there is a signal from the retarder switch (9), the regulating device (4) is connected to the retarder (2).

2. Control device according to Claim 1, characterised by the following features:
2.1 the regulating device (4) is constructed as a pneumatic proportional valve;
2.2 a pneumatic regulating cylinder (6) is associated with the output regulating member (5) of the driving engine.

3. Control device according to one of Claims 1 or 2, characterised in that the switching device (7) is a multi-way valve.

4. Control device according to one of Claims 1 to 3, characterised in that when the maximum speed is not reached and there is a signal from the retarder switch (9) and simultaneous activation of a second control device, which is active at the output regulating member (5), the switching device (7) adopts the first switching position (SI).

5. Control device according to one of Claims 1 to 4, characterised by the following features:
5.1 as a signal from the retarder switch (9), a desired adjustable speed value (constant speed function) is adhered to;
5.2 the control device (1) brings about a continuous comparison between the current actual speed and the desired constant speed and in the case of a deviation, an adjustment of the desired speed value by controlling the retarder (2).

6. Control device according to one of Claims 1 to 5, characterised in that the control device (1) comprises integrated switching logic.

7. Control device according to one of Claims 1 to 5, characterised in that the control device (1) is constructed as a microprocessor, in which preprogrammable routines are worked out.

8. Control device according to one of Claims 1 to 7, characterised in that upon the presence of the signal from the retarder switch "constant speed" (V_{const}) the output regulating member of the driving engine is brought first of all into the idling position.

## Revendications

1. Dispositif de commande servant à influencer la vitesse, destiné à être utilisé dans des véhicules avec un retardateur et un moteur d'entraînement avec l'organe de réglage de la puissance correspondant, dans lequel :
1.1 il est prévu un dispositif de commande (1),
1.2 il est prévu un dispositif de réglage (4),
1.3 il est prévu un dispositif de branchement (7) avec au moins une première position de branchement (SI) et une deuxième position de branchement (SII),
1.4 le dispositif de réglage (4) est couplé au retardateur (2) dans la première position de branchement (SI),
1.5 le dispositif de réglage (4) est relié à l'organe de réglage de la puissance (5) du moteur d'entraînement (3) dans la seconde position de branchement,
1.6 le dispositif de commande (1) présente au moins une première entrée pour un signal de vitesse,
1.7 la première entrée est couplée à un dispositif de mesure, qui mesure la vitesse réelle du véhicule ou la vitesse de rotation des roues,
1.8 le dispositif de commande (1) fait en sorte que la vitesse réelle est comparée à une vitesse maximale autorisée que l'on peut régler au préalable,
1.9 le dispositif de commande (1) présente au moins une première et une deuxième sortie,
caractérisé par les particularités suivantes :
1.10 le dispositif de commande (1) présente au moins une autre seconde entrée pour un signal d'un déclencheur du retardateur (9),
1.10 la première sortie est couplée au dispositif de réglage (4),
1.11 la deuxième sortie est couplée au dispositif de branchement (7),
1.12 le dispositif de commande (1) fait en sorte que dans le cas d'une comparaison de la vitesse réelle avec une vitesse maximale autorisée qui peut être réglée auparavant.
- le dispositif de réglage (4) est couplé au moteur d'entraînement (3) dans le cas d'un dépassement de la vitesse maximale autorisée et de la mise du commutateur du retardateur à la position zéro,
- le dispositif de réglage (4) est couplé au retardateur (2) lors du dépassement de la vitesse maximale autorisée et d'un signal du commutateur du retardateur (9).

2. Dispositif de commande selon la revendication 1,
caractérisé par
les particularités suivantes :
2.1 le dispositif de réglage(4) est réalisé sous la forme d'une vanne de pression proportionnelle pneumatique,
2.2 on associe à l'organe de réglage de la puissance (5) du moteur d'entraînement un vérin de réglage pneumatique (6).

3. Dispositif de commande selon l'une des revendications 1 ou 2,
caractérisé en ce que
le dispositif de branchement (7) est un distributeur à plusieurs voies.

4. Dispositif de commande selon l'une des revendications 1 à 3,
caractérisé en ce que
lors du dépassement de la vitesse maximale et de l'existence du signal du commutateur du retardateur (9) et lors de l'activation simultanée d'un deuxième dispositif de commande, qui est opérationnel sur l'organe de réglage de la puissance (5), le dispositif de commande (7) prend la première position de branchement (SI).

5. Dispositif de commande selon l'une des revendications 1 à 4,
caractérisé par
les particularités suivantes :
5.1 on applique comme signal du déclencheur du commutateur (9) le maintien d'une valeur réglable voulue de la vitesse (fonctionnement à vitesse constante).
5.2 le dispositif de commande (1) fait en sorte que l'on ait une comparaison continue entre la vitesse réelle et la vitesse constante voulue et en cas d'écart une régulation de la valeur de la vitesse voulue commandée par le retardateur (2).

6. Dispositif de commande selon l'une des revendications 1 à 5,
caractérisé en ce que
le dispositif de commande (1) comprend un circuit logique intégré.

7. Dispositif de commande selon l'une des revendications 1 à 5,
caractérisé en ce que
le dispositif de commande (1) est réalisé sous la forme d'un microprocesseur dans lequel sont traitées des routines programmables auparavant.

8. Dispositif de commande selon l'une des revendications 1 à 7,
caractérisé en ce que
s'il y a le signal du commutateur du retardateur 〈〈 vitesse constante 〉〉 (Vₖₒₙₛₜ), l'organe de réglage de la puissance du moteur d'entraînement est mis d'abord sur la position de ralenti.
